# EUROPEAN PATENT APPLICATION

(11) **EP 4 398 134 A1**
(43) Date of publication of application: **10.07.2024**
(21) Application number: 22864796.2
(22) Date of filing: 28.03.2022
(51) Int. Cl.: G06F 21/32, G06V 40/16, G06V 40/20, G06F 21/45

(54) **METHOD AND DEVICE FOR DETECTING ACTIVE LIVENESS BY USING FACIAL IMAGE**

(30) Priority: 02.09.2021 KR 20210116673
(71) Applicant: Cubox Co., Ltd., Seoul, 06236 (KR)
(72) Inventor: NAM, Un Sung, Seoul 04311 (KR); NAM, Yong Han, Seoul 06204 (KR)
(74) Representative: Ostertag & Partner Patentanwälte mbB
(86) International application number: PCT/KR2022/004293
(87) International publication number: WO 2023/033287

(57) **Abstract**

A method of detecting active liveness using a facial image includes generating, by an authentication device, a command for user authentication, outputting, by the authentication device, the command to a screen and capturing a facial image of a user pronouncing the output command, and extracting, by the authentication device, feature points for a change in mouth shape from the facial image and determining whether the user pronounces the command.

## Description

### CROSS-REFERENCE TO RELATED APPLICATION

This application claims priority to and the benefit of PCT/KR Application No. PCT/KR2022/004293 filed in the Korean Intellectual Property Office on March 28, 2022, the entire contents of which are incorporated herein by reference.

### BACKGROUND

### 1. Technical Field

The disclosed technology relates to a method and device for detecting active liveness using a facial image of a user pronouncing a command.

### 2. Related Art

As non-face-to-face service environments increase and the scale of the facial recognition market grows, various services using facial recognition technology are being released, and the importance of liveness detection and anti-spoofing is increasing day by day.

Due to this importance, research and product development on various liveness detection methods are in progress. However, liveness detection technologies built into most commercialized facial recognition systems are based on methods using additional sensors or special cameras, and thus have less accessibility from the actual user perspective.

Recently, various face liveness detection prevention techniques based on an RGB camera have emerged. However, since the techniques still only operate under specific sensors and environmental conditions or are vulnerable to puncturing printed paper, media streaming attacks, or the like, there is an increasing need for liveness detection technology that is more stable for use on general-purpose cameras such as an RGB camera.

Meanwhile, methods for detecting facial liveness based on an RGB camera may be divided into a single frame based method using only still images and a multi frame based method using one or more frames depending on an image frame used, and may be divided into active and passive methods depending on whether a user action is required.

The existing implemented multi frame based liveness detection method follows a method of inducing a single action, such as turning a user's head, blinking a user's eyes, or opening a user's mouth, according to instructions on a screen, or a method of making a determination by combining two or more actions, but this has had a problem of still being vulnerable to the media streaming attacks because the combination of the user actions that can be induced is limited.

### SUMMARY

The disclosed technology provides a method and device for detecting liveness by allowing a user to pronounce randomly generated commands and acquiring a facial image of the user pronouncing the commands.

According to a first aspect of the disclosed technology, a method of detecting active liveness includes generating, by an authentication device, a command for user authentication, outputting, by the authentication device, the command to a screen and capturing a facial image of a user pronouncing the output command, and extracting, by the authentication device, feature points for a change in mouth shape from the facial image and determining whether the user pronounces the command.

According to a second aspect of the disclosed technology, a device for detecting active liveness includes a sensor that identifies that a user enters a range where face capturing is possible, a storage device that stores data on a plurality of syllables to generate a command for authenticating the user, an output device that outputs the command to a screen and captures a facial image of the user pronouncing the output command, and a calculation device that generates the command composed of a certain number of syllables using the data on the plurality of syllables, and extracts feature points from the facial image to determine whether the user pronounces the command.

### BRIEF DESCRIPTION OF DRAWINGS

FIG. 1 is an example of a system for detecting active liveness using a facial image according to an embodiment of the disclosed technology.
FIG. 2 is a flowchart of a method of detecting active liveness using a facial image according to an embodiment of the disclosed technology.
FIG. 3 is a block diagram of a device for detecting active liveness using a facial image according to an embodiment of the disclosed technology.
FIG. 4 is a diagram illustrating selection of some distinguishable vowels among Korean vowels.
FIG. 5 is a diagram illustrating a command generated from a certain number of word segments.
FIG. 6 is a diagram illustrating extracting feature points from a facial image.

### DESCRIPTION OF EXAMPLE EMBODIMENTS

Since the present invention may be variously modified and have several exemplary embodiments, specific exemplary embodiments will be illustrated in the accompanying drawings and described in detail in a detailed description. However, it is to be understood that the present invention is not limited to a specific exemplary embodiment, but includes all modifications, equivalents, and substitutions without departing from the scope and spirit of the present invention.

Terms such as "first," "second," "A," "B," and the like may be used to describe various components, but the components are not to be interpreted as limited by the terms, which are used only for distinguishing one component from other components. For example, a first component may be named a second component and a second component may also be similarly named a first component, without departing from the scope of the present invention. The term "and/or" includes a combination of a plurality of related described items or any one of the plurality of related described items.

In the terms used in this specification, singular expressions should be understood to include plural expressions unless they are clearly interpreted differently in the context. It will be further understood that the terms "include" and the like specify the presence of stated features, steps, operations, components, parts, or a combination thereof, but do not preclude the presence or addition of one or more other features, numerals, steps, operations, components, parts, or a combination thereof.

Prior to the detailed description of the drawings, it is intended to clarify that the components in this specification are only distinguished by the main functions of each component. That is, two or more components to be described below may be combined into one component, or one component may be divided into two or more for each subdivided function.

In addition, each of the constituent parts to be described below may additionally perform some or all of the functions of other constituent parts in addition to the main functions of the constituent parts, and some of the main functions of the constituent parts may be performed exclusively by other components. Therefore, the presence or absence of each component described throughout this specification should be interpreted functionally.

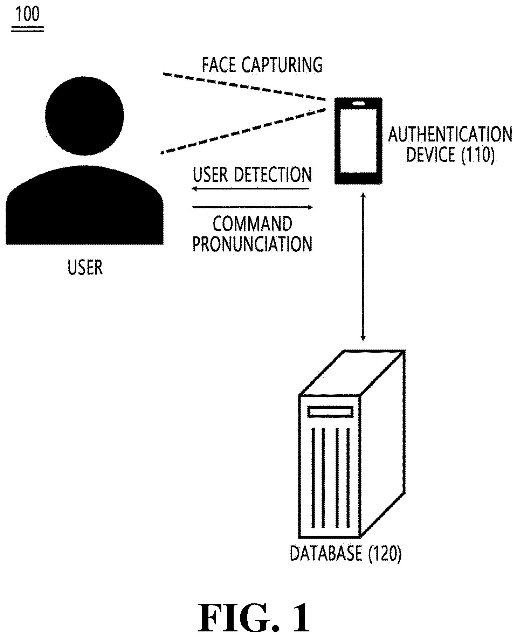

FIG. 1 is an example of a system 100 for detecting active liveness using a facial image according to an embodiment of the disclosed technology. Referring to FIG. 1, an authentication device 110 may generate a command for user authentication and capture a user pronouncing the command. By analyzing the changes in mouth shape and facial muscles in the captured facial image, it may be determined whether the user pronounces the given command.

The authentication device 110 captures a facial image of the user. A camera may be mounted for image capturing. The authentication device 110 may determine a capturing range depending on the type of camera, and generate a command for user authentication when it detects that a user has entered the capturing range. Then, the camera may operate to capture the facial image of the user. The facial image captured by the authentication device 110 includes the change in mouth shape and the change in facial muscles while the user pronounces the command. The authentication device 110 may extract feature points for the change in mouth shape and the change in facial muscles and compare the extracted feature points with feature points for commands.

Meanwhile, the command mentioned in the disclosed technology is for checking a user's liveness and refers to a certain number of syllables that any user accessing the authentication device 110 who is a real person should be able to sufficiently pronounce. The command may randomly select a certain number of syllables to be used as a command among a plurality of syllables.

Meanwhile, there are cases where there is no difference in the mouth shape when pronouncing some syllables. For example, "go" or "o" are syllables in which "g" and "ng" are combined with the same vowel, but when these syllables are actually pronounced, the mouth shapes are not distinguishable from each other. Therefore, the authentication device 110 may store, in a database 120, some syllables whose mouth shapes are distinguishable when pronounced in advance and generate a command by randomly selecting a certain number of syllables from some syllables when generating the command.

Meanwhile, in order to distinguish the mouth shapes, the authentication device 110 may store, in the database 120, a combination of some Korean vowels with distinguished pronunciation shapes and consonants that are bilabial sounds when combined with some of the vowels and combinations between some of the vowels with distinguished pronunciation shapes and consonants that are not bilabial sounds when combined with some of the vowels. A certain number of randomly selected syllables from among these syllables may be generated as a command.

Meanwhile, the database 120 may store the feature points for the mouth shapes that match each other for each syllable. For example, feature point information on the mouth shape when pronouncing "o" may be stored together with the syllable "o." The feature point information is matched to each syllable stored in the database 120, which may be used to compare feature points extracted from the facial image of the user. The authentication device 110 may determine whether the user pronounces the command by comparing the feature points for the change in mouth shape extracted from the facial image and the feature points for the command. In this case, the similarities may be compared 1:1 by sequentially dividing according to the number of syllables included in the command. For example, when the number of syllables included in the command is 5, the feature points extracted from the facial image of the user may be divided into 5 and the similarities of each of the feature points divided into 5 may be sequentially compared. In this process, when the similarity exceeds a threshold, it may be determined that the user correctly pronounces the command. In FIG. 1, Korean syllables are described as an example, but the same principle can also be applied to syllables in English or other languages. For example, in the case of English, after the letters remaining after excluding some letters whose pronunciation is not distinguished among the total 26 letters are stored in the database 120, a certain number of letters are randomly selected from among the stored letters to generate a command.

Meanwhile, the authentication device 110 may check liveness more precisely by using a change in facial muscles between syllables during the process of pronouncing a command. When a person pronounces a specific syllable and then the next syllable, the change in facial muscles between syllables may be similar for everyone. That is, when a real person pronounces syllables, even when a person pronounces a command, the change in facial muscles between syllables may appear as similar feature points. Therefore, based on the syllables previously stored in the database 120, the feature point information on the change in facial muscles corresponding to all cases may be stored and later compared with feature points for the change in facial muscles in the facial image of the user to determine liveness. In an embodiment, when the number of syllables included in the command is 5, after the feature points extracted from the facial image of the user are first divided into 5, the end of the first divided feature point and the beginning of the second divided feature point may be combined to form the first segmented feature point to be determined as the feature points for the change in facial muscles between the first syllable and the second syllable. In addition, it is possible to more precisely determine the liveness by comparing with the feature points stored in the database 120.

Meanwhile, when it is determined that the user accurately pronounces the command, the authentication device 110 may transmit a control signal to the control device that controls the gate to be opened or closed, thereby allowing the user to pass through the gate. The authentication device 110 may be connected to the control device that controls the gate, or the two devices may be combined into one. When the devices are separate devices, the authentication device 110 may control the gate by transmitting the control signal to the control device, and when the devices are the same device, the gate may be controlled directly. Therefore, by checking the active liveness using the command generated in real time, it is possible to prevent leakage of passwords for gate entry and enhance security.

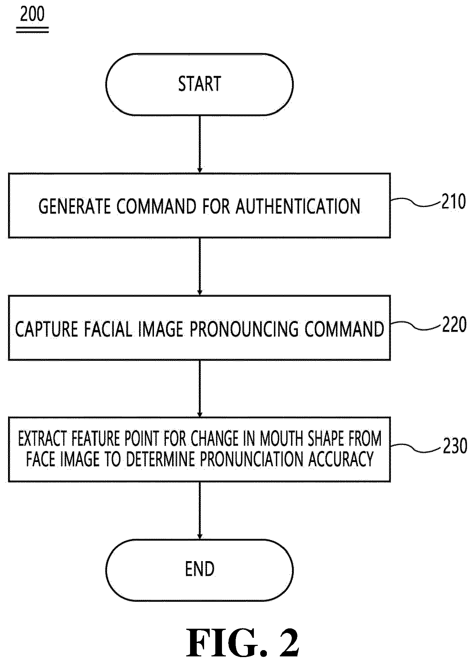

FIG. 2 is a flowchart of a method of detecting active liveness using a facial image according to an embodiment of the disclosed technology. Referring to FIG. 2, a method 200 of detecting active liveness includes a command generation operation 210, a facial image capturing operation 220, and a pronunciation determination operation 230. Each operation may be performed sequentially through the authentication device.

In operation 210, the authentication device generates a command for user authentication. A command is a certain number of syllables randomly selected from among a plurality of syllables, and the process of generating a command is as described with reference to FIG. 1. The number of syllables to be generated by a command may be determined according to a preset value. In operation 210, a command generation time may be a time when a user enters a range where face capturing is possible.

In operation 220, the authentication device captures a facial image of a user. Prior to capturing the facial image, the authentication device may output the generated command to the user. For example, a command generated internally in the device may be output through a screen. Then, the facial image is captured when the user pronounces the output command.

In operation 230, the authentication device extracts the feature points for the change in mouth shape from the facial image to determine whether the user pronounces the command. In operation 230, the authentication device may compare whether the feature points for the mouth shape extracted from the facial image of the user are similar to the feature points of the mouth shape for pronouncing a certain number of syllables included in the command to determine whether the user accurately pronounces the command. In this case, by comparing whether the feature points for the facial muscles extracted from the facial image match the feature points for the facial change among a certain number of syllables included in the command, it is possible to more precisely detect the liveness.

The conventional voice recognition-based authentication technology may use words or word segments registered by a user as passwords in advance, but this has a problem in that pre-registered information leaks. The authentication technology that compares similarities of voice generates a voice similar to a user's mechanically registered voice, and therefore has a problem in that unauthorized persons pass authentication. In order to solve this problem, this technology has the advantage of accurately authenticating a user's identity because it may check a user's liveness using commands that are randomly generated in real time.

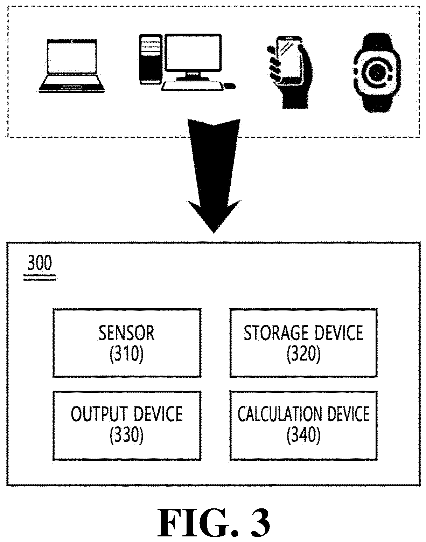

FIG. 3 is a block diagram of a device for detecting active liveness using a facial image according to an embodiment of the disclosed technology. A device 300 for detecting active liveness may be implemented in various forms such as a personal computer (PC), a laptop computer, a smart device, or a wearable device. Referring to FIG. 3, the device 300 for detecting active liveness includes a sensor 310, a storage device 320, an output device 330, and a calculation device 340.

The sensor identifies that a user enters a range where face capturing is possible. In an embodiment, the sensor may be an infrared sensor that detects a person's approach at a gate. Of course, sensors using ultrasound instead of an infrared sensor or other types of human body detection sensors may be used.

The storage device 320 stores data on a plurality of syllables to generate a command for authenticating a user. The storage device 320 stores not only a plurality of syllables but also feature point information on a mouth shape when pronouncing each syllable and feature point information on a change in facial muscles between syllables, and therefore may use memory of sufficient capacity to store all data.

The output device 330 includes a display that outputs a command to a screen and a camera that captures a facial image of a user pronouncing the output command. In addition, when outputting the command through the display, a voice or guidance message may be additionally output so that the user may read the command. Therefore, the output device may also be equipped with a speaker for outputting a voice.

The calculation device 340 generates a command composed of a certain number of syllables using data on a plurality of syllables stored in the storage device 320. Then, feature points are extracted from the facial image captured by the output device 330 to determine whether the user pronounced the command. The calculation device may be a processor or CPU of the device 300 for detecting active liveness.

Meanwhile, the device 300 for detecting active liveness may be implemented as a program (or application) including an executable algorithm that may be executed on a computer. That is, it may be a program that runs on a computer. The program may be stored and provided in a non-transitory computer readable medium.

The non-transitory computer-readable medium is not a medium that stores data therein for a while, such as a register, a cache, a memory, or the like, but a medium that semi-permanently stores data therein and is readable by a device. Specifically, various applications or programs described above may be provided by being stored in non-transitory readable media such as a compact disk (CD), a digital video disk (DVD), a hard disk, a Blu-ray disk, a universal serial bus (USB), a memory card, a read-only memory (ROM), a programmable ROM (PROM), an erasable PROM (EPROM), an electrically erasable PROM (EEPROM), or a flash memory.

The transitory readable media are various RAMs such as a static RAM (SRAM), a dynamic RAM (DRAM), a synchronous DRAM (SDRAM), a double data rate SDRAM (DDR SDRAM), an enhanced SDRAM (ESDRAM), a synclink DRAM (SLDRAM), and a direct rambus RAM (DRRAM).

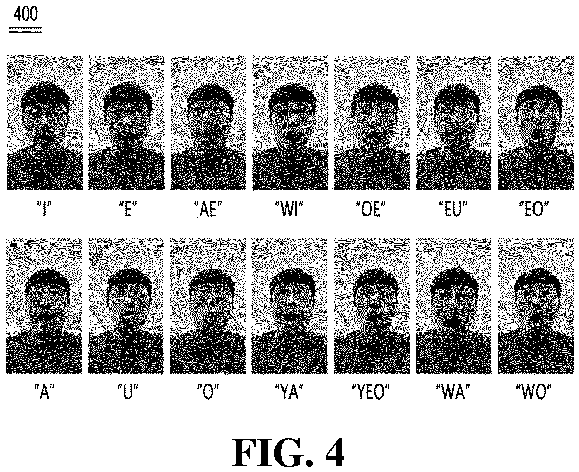

FIG. 4 is a diagram illustrating selection of some distinguishable vowels among Korean vowels. As illustrated in FIG. 4, 14 vowels whose pronunciation may be distinguished are selected from among a total of 21 vowels that make up Hangul. The 14 selected vowels are "i," " e," "ae," "wi," "oe," "eu," "eo," "a," "u," "o," "ya," "yeo," "wa," and "wo." A plurality of syllables may be generated by combining selected vowels and selected consonants among all consonants. The authentication device may store syllables generated according to this process. As described above, since not only are the syllables stored, but also feature point information on the mouth shape when pronouncing each syllable and feature point information on a facial change between syllables are stored together, when the storage space of the authentication device is not sufficient, they may be stored in a separate database or server. In FIG. 4, Hangul is described as an example, but even in the case of English or other languages, only a part of the pronunciation that can be identified may be extracted to be used as data for generating a command.

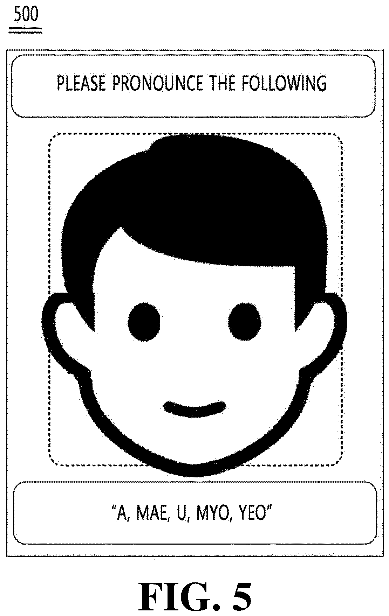

FIG. 5 is a diagram illustrating a command generated from a certain number of word segments. As illustrated in FIG. 5, a command may be generated with five word segments. The syllables selected by the command each are a combination of consonants and vowels. Here, the vowels are those selected previously in FIG. 4, and consonants may be partially selected as those that are bilabial sounds and those that are not bilabial sounds when combined with vowels among all the consonants. For example, as in the command of FIG. 5, a consonant that is a bilabial sound may be "m," and a consonant that is not a bilabial sound may be "ng." Meanwhile, in FIG. 5, the number of syllables of a command is 5 as an example, but it may be set to shorter or longer. For example, the number of syllables to be included in the command may be determined according to setting values input in advance by an administrator of the authentication device.

Meanwhile, in the process of presenting a command to a user, a guidance message may be output on a screen. As illustrated in FIG. 5, the message "Please pronounce the following for authentication" may be output, and the message may also be output as a voice through a speaker.

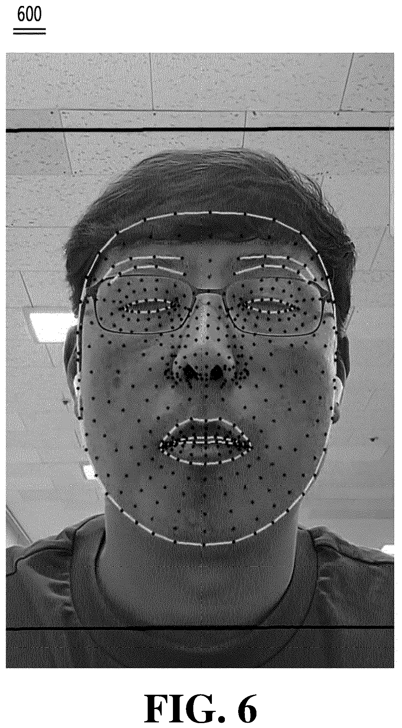

FIG. 6 is a diagram illustrating extracting feature points from a facial image. Referring to FIG. 6, a deep learning model may be used to extract feature points. The deep learning model may be trained in advance to extract feature points, and after the training is completed, it may be mounted on an authentication device to extract feature points for a facial image of a user. In this case, in order to detect whether the command presented to the user is pronounced correctly, the feature points about the mouth shape may be extracted and compared.

A plurality of syllables and information on features points indicating pronunciation for each syllable may be matched and stored in the data stored for generating the command. That is, it is possible to determine whether a user correctly pronounces the command by extracting the feature points of the mouth shape from the facial image captured through the deep learning model and then matching the extracted feature points to the feature points for each syllable included in the command. Naturally, since it is close to impossible for two feature points to match 100%, it may be determined whether the authentication succeeds or fails by comparing the similarity between the feature points. When the similarity exceeds a certain level, it may be determined that there is no problem with the user's liveness.

Meanwhile, when a user pronounces a syllable in a specific place and then pronounces the syllable in the next place, the shape of the facial muscles may change to a form that is defined to a certain degree. That is, regardless of who pronounces the syllables, roughly similar facial muscle changes may be expected. Taking this into consideration, this technology may more precisely detect the user's liveness by a method of storing feature point information corresponding to a facial change between syllables in advance, and then extracting feature points for the facial change between the syllables from a facial image and matching the extracted feature points to each other. For example, the liveness may be detected by comparing changes in the shape or position of the cheekbones, the philtrum, the eyebrows, etc., between the syllables.

Embodiments of the disclosed technology may have effects including the following advantages. However, since this does not mean that the embodiments of the disclosed technology should include all of the following effects, the scope of rights of the disclosed technology should not be understood as being limited thereto.

The method and device for detecting active liveness using a facial image according to the embodiment of the disclosed technology has the effect of detecting a user's liveness through commands generated in real time.

In addition, since the commands that are the combination of syllables with no meaning are generated every time, it is possible to prevent the problems caused by the leakage of the commands.

In addition, it is possible to improve accuracy by detecting the liveness based on the feature points for the change in mouth shape when pronouncing the syllables and the feature points for the change in facial muscles between the syllables.

The method and device for detecting active liveness using a facial image according to an embodiment of the disclosed technology have been described with reference to embodiments illustrated in the drawings to help understanding, but this is merely illustrative, and those skilled in the art will understand that various modifications and other equivalent embodiments are possible therefrom. Accordingly, the true technical scope of the disclosed technology is to be determined by the spirit of the appended claims.

## Claims

1. A method of detecting active liveness, comprising:
generating, by an authentication device, a command for user authentication;
outputting, by the authentication device, the command to a screen and capturing a facial image of a user pronouncing the output command; and
extracting, by the authentication device, feature points for a change in mouth shape from the facial image and determining whether the user pronounces the command.

2. The method of claim 1, wherein, in the generating of the command, the command is generated when it is identified that the user enters a range where face capturing is possible.

3. The method of claim 1, wherein the command is a certain number of syllables randomly selected from among a plurality of syllables.

4. The method of claim 3, wherein the certain number of syllables is randomly selected from a combination of some Korean vowels with distinguished pronunciation shapes and consonants that are bilabial sounds when combined with some of the vowels, and
combinations between some of the vowels with distinguished pronunciation shapes and consonants that are not bilabial sounds when combined with some of the vowels.

5. The method of claim 1, wherein, in the determining of whether the user pronounces the command, it is determined whether feature points for the mouth shape extracted from the facial image are similar to feature points for the mouth shape for pronouncing the certain number of syllables included in the command.

6. The method of claim 1, wherein, in the determining of whether the user pronounces the command, it is determined whether feature points for facial muscles extracted from the facial image match feature points for a facial change among a certain number of syllables included in the command.

7. The method of claim 1, wherein the authentication device is connected to a control device that controls a gate to be opened or closed and transmits a control signal to the control device according to a result of the determination.

8. A device for detecting active liveness, comprising:
a sensor that identifies that a user enters a range where face capturing is possible;
a storage device that stores data on a plurality of syllables to generate a command for authenticating the user;
an output device that outputs the command to a screen and captures a facial image of the user pronouncing the output command; and
a calculation device that generates the command composed of a certain number of syllables using the data on the plurality of syllables, and extracts feature points from the facial image to determine whether the user pronounces the command.

9. The device of claim 8, wherein the certain number of syllables is randomly selected from a combination of some Korean vowels with distinguished pronunciation shapes and consonants that are bilabial sounds when combined with some of the vowels, and
combinations between some of the vowels with distinguished pronunciation shapes and consonants that are not bilabial sounds when combined with some of the vowels.

10. The device of claim 8, wherein the calculation device determines whether feature points for a mouth shape extracted from the facial image are similar to feature points for mouth shape for pronouncing the certain number of syllables included in the command.

11. The device of claim 8, wherein the calculation device determines whether feature points for facial muscles extracted from the facial image match feature points for a facial change among the certain number of syllables included in the command.

12. The device of claim 8, wherein the calculation device includes a deep learning model that analyzes the facial image, and
inputs the facial image to the deep learning model to determine the user's pronunciation according to the output result.

13. The device of claim 8, wherein the calculation device transmits a control signal to a control device that controls a gate to be opened or closed according to a result of the determination.
